# EUROPEAN PATENT SPECIFICATION

(11) **EP 0 975 085 B1**
(45) Date of publication and mention of the grant of the patent: **09.02.2005**
(21) Application number: 98830446.5
(22) Date of filing: 22.07.1998
(51) Int. Cl.: H02N 1/00, G11B 21/02

(54) **Integrated device comprising a structure for electrostatic transport of dielectric particles generated in devices for actuating hard discs, and electrostatic transport method**
Integrierte Anordnung mit einer Vorrichtung für den elektrostatischen Transport von dielektrischen Teilchen, die in einer Vorrichtung zum Betätigen von Festplatten erzeugt werden, und elektrostatisches Transportverfahren
Dispositif intégré comprenant un dispositif pour le transport électrostatique de particules diélectriques générées dans les dispositifs d'entrainement des disques durs et méthode de transport électrostatique

(43) Date of publication of application: 26.01.2000
(73) Proprietor: STMicroelectronics S.r.l., 20041 Agrate Brianza (Milano) (IT)
(72) Inventor: Murari, Bruno, 20052 Monza (IT); Vigna, Benedetto, 85100 Potenza (IT); Ferrari, Paolo, 21013 Gallarate (IT)
(74) Representative: Cerbaro, Elena, Dr.

(56) References cited:
- EP-A- 0 482 205
- FR-A- 2 296 297
- MOESNER F M ET AL: "ELECTROSTATIC DEVICES FOR PARTICLE MICRO-HANDLING" RECORD OF THE INDUSTRY APPLICATIONS CONFERENCE (IAS), ORLANDO, OCT. 8 - 12, 1995, vol. 2, no. CONF. 30, 8 October 1995, pages 1302-1309, XP000546872 INSTITUTE OF ELECTRICAL AND ELECTRONICS ENGINEERS
- HIROYUKI FUJITA ET AL: "POSITION CONTROL OF AN ELECTROSTATIC LINEAR ACTUATOR USING ROLLING MOTION" MECHATRONICS, vol. 2, no. 5, 1 October 1992, pages 495-502, XP000297938

## Description

The invention relates to an integrated device for actuating hard disks comprising a structure for electrostatic removal of dielectric particles, and a method for removing contaminating particles in hard disk actuators.

As is known, devices for actuating hard discs with electrostatic-type micrometric actuation generate, during operation, harmful dielectric particles that may block the microactuator.

Centrifuge or forced air jet systems have been proposed to solve this problem. Both solutions are very costly and bulky, however, and are not applicable to devices of small size such as the above-mentioned microactuator for hard discs.

EP-A-0 482 205 teaches the use of an electrostatic actuator formed by a first member having strip-like electrodes; and a second member facing the first member. The electrodes are biased by a voltage varying with a predetermined pattern to cause the second member to move with respect to the first member.

The article "Electrostatic Devices for Particle Micro-Handling" Record of the industry applications conference (IAS), Orlando, Oct. 8-12, 1995 teaches applying a balanced multi-phase high voltage to a series of encased parallel electrodes for particle conveyance smoothing, grouping and sorting.

The article "Position control of an electrostatic linear actuator using rolling motion" Mechatronics, col. 2, no 5, 1 October 1992, pages 495-502 XP000297938 teaches a microactuator formed by a plane wafer with striped electrodes with an insulation layer and a thin cylindrical roller. High voltage is applied to the electrodes beneath the roller in the driving direction and the roller is kept at ground potential so as to rotate in the direction determined by the applied electric field.

The object of the invention is therefore to provide a structure for removing dielectric particles whose size is small and compatible in particular with that of integrated devices and which is inexpensive to produce and operate.

The present invention provides an integrated device comprising a hard disk actuator and a structure for electrostatic removal of dielectric particles, and a method for removing contaminating particles in hard disk actuators, as defined in Claims 1 and 9 respectively.

In practice, the invention provides a plurality of conductive regions that are adjacent and spaced apart to each other and to which bias pulse trains are supplied. Each biased conductive region therefore generates an electric field that attracts any dielectric particles. The pulse trains supplied to immediately adjacent annular regions are phase-shifted of a predetermined time and in a direction linked to the direction of movement desired for the electrostatic particles. In particular, each conductive region receives voltage pulses delayed with respect to the voltage pulses sent to the immediately preceding conductive region in the direction of desired movement and advanced with respect to the voltage pulses sent to the immediately successive conductive region.

For the understanding of the invention a preferred embodiment thereof will now be described, purely by way of non-exhaustive example and with reference to the accompanying drawings, wherein:
- Fig. 1 shows the general structure of a device for actuating hard discs, of known type;
- Fig. 2 shows a side view of a detail of the actuating device of Fig. 1;
- Fig. 3 is a diagrammatic, partial view of a known microactuator, included in the actuating device of Fig. 1;
- Fig. 4 shows a diagrammatic top view of the present transport structure;
- Fig. 5 shows the diagram of the actuation voltages applied to the structure of Fig. 4;
- Fig. 6 shows the action of an electric field on a dielectric particle in diagrammatic form;
- Fig. 7 is a cross-section through the structure of Fig. 4 showing the principle on which the present structure operates; and
- Figs. 8 to 11 show cross-sections through the present structure, in successive production steps.

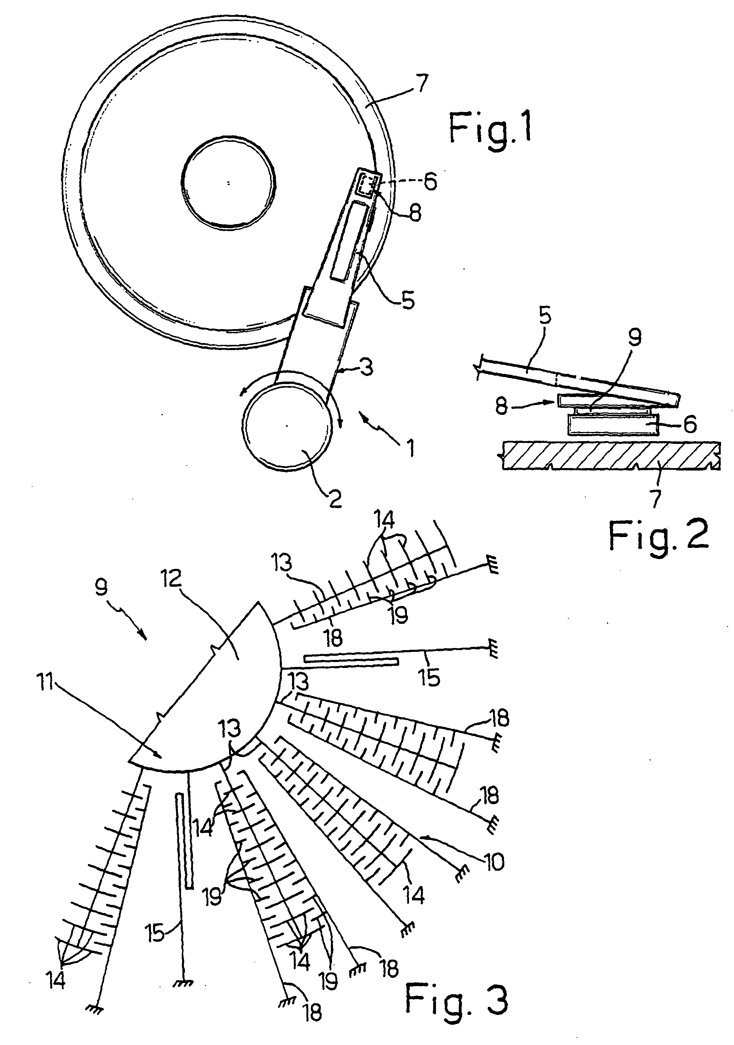

Fig. 1 shows a known actuating device 1 of rotary type comprising a motor 2 (also known as a "voice coil motor") attached to a support body 3. The support body 3 has at least one suspension 5 formed by a cantilevered lamina. At the end not connected to the support body 3, the suspension 5 has an R/W (read/write) transducer 6, also known as a "slider" and disposed (in operating condition) facing a surface of a hard disc 7. The R/W transducer 6 is connected to a coupling, known as gimbal 8, via a microactuator 9 (Fig. 2).

The actuating device 1 is of the dual actuation type. A first, coarser actuation stage is formed by motor 2 that moves the unit formed by the support body 3, the suspension 5 and the R/W transducer 6 across the hard disc 7 during tracking. A second, finer actuation stage is formed by the microactuator 9, the purpose of which is to accurately control the position of R/W transducer 6.

The microactuator 9 of Fig. 3 is of the rotary electrostatic type (only a part of which is shown, because of its radial symmetry) and comprises an external stator 10, intended to be rigidly connected to the gimbal 8 (Fig. 2) and an internal rotor 11, intended to be bonded to the R/W transducer 6 (Fig. 2), and capacitively coupled to the stator 10.

Rotor 11 comprises a suspended mass 12 of substantially circular shape and a plurality of movable arms 13 extending radially towards the outside from the suspended mass 12. Each movable arm 13 has a plurality of movable electrodes 14 extending in a substantially circumferential direction and equidistant from each other. The rotor 11 further comprises anchoring and elastic suspension elements (springs 15) for supporting and biasing the rotor 11.

Stator 10 comprises a plurality of fixed arms 18 extending radially and each bearing a plurality of fixed electrodes 19; in particular, associated with each movable arm 13 are two fixed arms 18, the fixed electrodes 19 of which extend towards the associated movable arm 13 and are intercalated or interleaved with the movable electrodes 14.

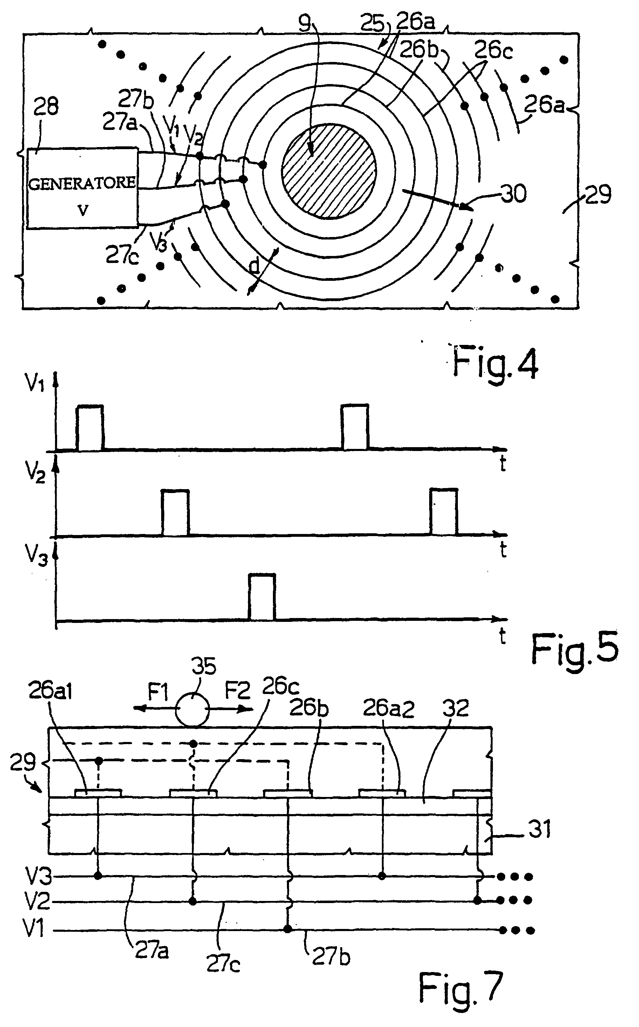

Fig. 4 shows a transport structure 25 for removing dielectric particles, as applied to the microactuator 9 of Fig. 3. The transport structure 25 comprises a plurality of annular regions 26a, 26b, 26c, of electrically conductive material, such as metal, disposed concentrically round microactuator 9. The annular regions 26a, 26b, 26c (at least three) are placed at a uniform distance d for example comprised between 1 and 10 µm (or of the same order of magnitude as the particles to be removed) and have a width for example also comprised between 1 and 10 µm.

Annular regions 26a, 26b, 26c are connected by three conductive lines 27a, 27b, 27c alternately every three, i.e. so that each annular region is connected to the third annular region that is adjacent in the radial direction towards the inside or towards the outside the transport structure 25. In the example shown, for reasons of clarity, the annular regions electrically connected by the conductive line 27a are denoted by 26a; the annular regions electrically connected by the conductive line 27b are denoted by 26b; and the annular regions electrically connected by the conductive line 27c are denoted by 26c.

A voltage source 28 is integrated into the same chip 29 housing the microactuator 9, its control logic (not shown) and the transport structure 25; alternatively, the voltage source 28 may be external. The voltage source 28 generates a pulsed three-phase voltage to bias the annular regions 26a, 26b, 26c. In particular, as shown in Fig. 5, voltage source 28 generates three pulsed voltages V1, V2, V3, identical to each other, phase-shifted by 120° with respect to each other and each supplied to a respective conductive line 27a, 27b, 27c.

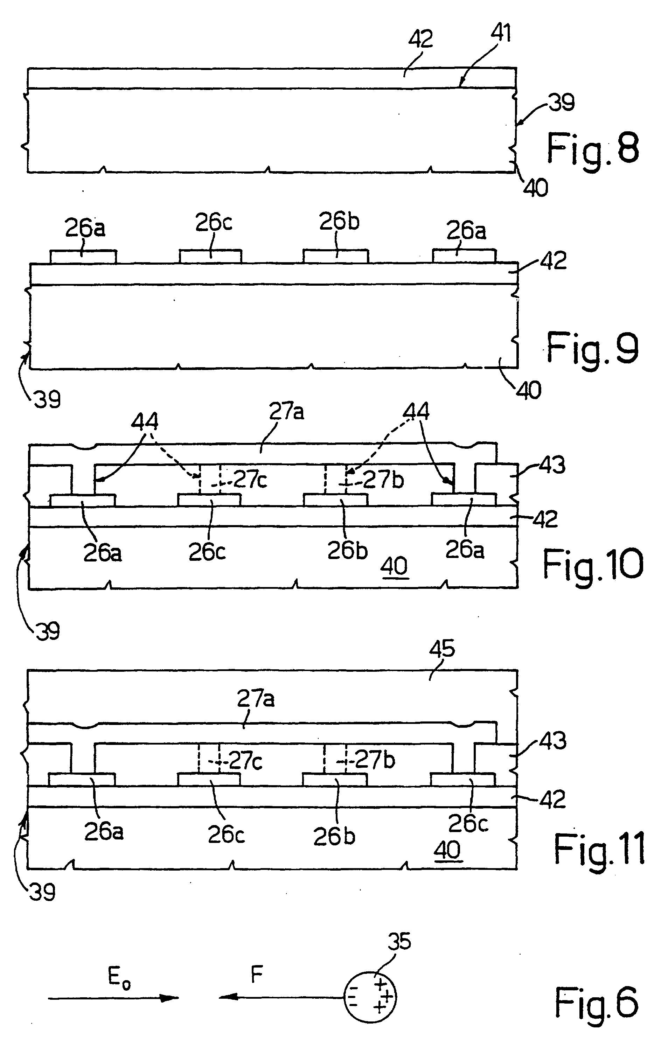

Biasing the annular regions 26a, 26b, 26c through voltage pulse trains that are identical to each other and delayed causes electric fields to be generated centred from time to time on the annular regions 26a, 26b, 26c which are then biased. The electric field generated by each biased annular region causes biasing of any dielectric particle that may be present in proximity to the surface of the chip 29 and exerts, on the particle and in known manner, an attractive force of a value proportional to the gradient of the electric field (and therefore to the amplitude of the voltage pulse applied) and inversely proportional to the cube of the distance between the biased annular region 26a, 26b, 26c and the dielectric particle. This action is shown diagrammatically in Fig. 6 that shows a dielectric particle 35 immersed in a field E_{o,} subject to a force F.

By sending voltage pulses V1, V2 and V3 to the annular regions 26a, 26b, 26c in the correct sequence, thereby biasing, in sequence, annular regions 26a, 26b, 26c that are consecutive in an external radial direction, resultant pulse forces which are always directed towards the outside are generated on any dielectric particles; these forces thus cause the dielectric particles to move towards the outside the transport structure 25 as shown diagrammatically by the arrow 30 in Fig. 4.

The action of transport structure 25 is explained in Fig. 7 which shows a cross-section of a portion of the chip 29 on the left of the microactuator 9 (not shown). As will be noted, in Fig. 7 the annular regions 26a, 26b, 26c are formed by metal regions disposed on top of an insulating layer 31 extending on top of a substrate 33 of semiconductor material. In Fig. 7 the dielectric particle 35 is disposed above annular region 26c (for example, previously attracted by a voltage pulse V3). Then, when the annular regions 26a are biased by a voltage pulse V1, two forces F1 and F2 caused by the simultaneous bias of an adjacent annular region on the left (denoted by 26a1 for ease of understanding) and an annular region further to the right, denoted by 26a2, act on the particle 35. By virtue of the distance difference between the particle 35 and the annular regions 26a1, 26a2, force F1 is much greater than force F2, and so a resultant force directed towards the left acts on the particle 35. The particle 35 thus moves towards the annular region 26a1 and thus, gradually, ever further towards the outside of the chip 29 due to a dielectrophoretic force.

The described transport system requires the application of at least three-phasic voltages, since by simply alternately biasing the annular regions (as shown in Fig. 7 by broken lines) would produce forces F1 and F2 which would be equal to each other and opposed, and the particle 35 would remain stationary.

The described transport system may also operate on charge particles or ions instead of on dielectric particles, by supplying the suitable polarity to the voltage applied to the conductive regions.

An example of the production steps of the transport structure 25 will now be described with reference to Figs. 8-11. Specifically, start is made from a wafer 39 comprising a substrate 40 of semiconductor material into which the microactuator 9, its control logic and the voltage source 28 (none of which is shown) have already been integrated. A dielectric layer 42 is present on the surface 41 of the substrate, such as the gate oxide layer of MOS transistors, if any are present, a layer of thermal oxide and/or the protective oxide layer formed on the regions formed on the substrate 40. A first metal layer (such as aluminium) is then deposited and defined to form first electrical connections of the microactuator 9 and of its control logic (neither of which is shown) and the annular regions 26a, 26b, 26c, as shown in Fig. 9. A dielectric layer 43, such as PSG (Phosphorous Silicon Glass), is then deposited; vias 44 are then opened and a second metal layer is deposited and shaped to form second electrical interconnections of the microactuator 9 and of its control logic (neither of which is shown) and the conductive lines 27a, 27b, 27c, as shown in Fig. 10 showing the conductive line 27a, the contact towards the annular regions 26a and, in broken lines, the contacts towards the annular regions 26b, 26c. Finally a passivation layer 45 which covers all the surface of the wafer is deposited, as shown in Fig. 11.

The advantages of the described transport structure are as follows. Primarily, it is completely integratable with the current integrated devices. Furthermore, the described transport structure is easy to manufacture and does not require special process steps, so that it does not involve additional production costs compared with those expected for the device to be protected, but only a special area.

Finally, it will be clear that many modifications and variations may be introduced to the structure described and illustrated herein, all of which come within the scope of the invention, as defined in the accompanying claims. In particular, the fact is stressed that instead of being produced on a semiconductor substrate using a metallization of the device, the described structure could be integrated inside the substrate or be produced through polysilicon regions deposited over the substrate. Furthermore, instead of using a second metallization, the conductive lines could be formed inside the substrate and/or, at least in part, pass through a non-closed portion of the annular regions, of C shape. The shape of the annular regions may vary; instead of defining concentric circumferences, for example, they may be formed by ovals, squares or other closed lines. Furthermore, should it be necessary to produce a transport mechanism that covers only part of the surface of the chip in a specific direction, it is sufficient to produce only adjacent line portions. The number of annular regions may vary according to the area to be covered; and there may be any number of phases (or of phase-shifted pulsed voltages) provided that there are no fewer than three, even though the solution with three phases is the simplest. Furthermore, the shown circuitry solution may be modified by generating a single pulsed voltage at the output of the voltage source 28 and providing delay means on the connection lines connected to the annular regions 26a, 26b, 26c.

## Claims

1. An integrated device (29) comprising a hard disk actuator and a structure (25) for electrostatic removal of dielectric particles, wherein said structure (25) comprises at least three conductive regions (26a, 26b, 26c) disposed adjacent to each other and sequence and periodic biasing means (27a, 27b, 27c, 28) for said conductive regions for biasing said conductive regions according to a sequence corresponding to a direction of desired removal of dielectric particles.

2. A device according to Claim 1, **characterized in that** said sequence and periodic biasing means (27a, 27b, 27c, 28) comprises a pulsed voltage source (28) and connection lines (27a, 27b, 27c) connected to said conductive regions and supplying successive voltage pulses (V1, V2, V3) to conductive regions (26a, 26b, 26c) adjacent in said direction of desired removal.

3. A device according to Claim 2, **characterized in that** said pulsed voltage source (28) has n outputs each connected to a respective connection line (27a, 27b, 27c), **in that** each connection line is connected to a conductive region (26a; 26b; 26c) every n conductive regions and **in that** different connection lines are connected to adjacent conductive regions.

4. A device according to Claim 3, **characterized in that** n is equal to three.

5. A device according to one of the preceding Claims, **characterized in that** said conductive regions (26a, 26b, 26c) extend along concentric closed lines.

6. A device according to one of the preceding Claims, **characterized in that** said conductive regions (26a, 26b, 26c) extend along concentric circumferences.

7. A device according to one of the preceding Claims, **characterized in that** it comprises a substrate (40) of semiconductor material, an electrically insulating material layer (41) extending on said substrate and **in that** said conductive regions (26a, 26b, 26c) extend on said electrically insulating material layer.

8. A device according to Claim 7, **characterized in that** said conductive regions (26a, 26b, 26c) comprise metal of a first metal level, **in that** said connection lines comprise metal of a second metal level and **in that** a dielectric material layer (43) extends between said conductive regions and said connection lines and has contact openings (44) between said conductive regions and said connection lines.

9. A method for electrostatically removing dielectric particles from an integrated device (29) including a hard disc actuator (9), **characterized in that** it comprises the step of:
- biasing in sequence and periodically at least three conductive regions (26a, 26b, 26c) arranged adjacent to each other according to a biasing sequence corresponding to a direction of desired removal of dielectric particles, thereby removing the dielectric particles from a surface of the hard disk.

10. A method according to Claim 9, **characterized in that** said biasing step comprises the steps of:
- generating at least one train of voltage pulses (V1, V2, V3) and
- sending, to each conductive region (26a, 26b, 26c), voltage pulses which are delayed with respect to voltage pulses sent to an immediately preceding conductive region in said direction of desired movement and advanced with respect to voltage pulses sent to an immediately successive conductive region in said direction of desired movement.

11. A method according to Claim 10, **characterized by** the step of generating n trains of voltage pulses phase-shifted with each other and in that each train of pulses is supplied to a conductive region (26a, 26b, 26c) every n conductive regions.

12. A method according to Claim 11, **characterized in that** n is equal to three.

13. A process for producing an integrated device comprising a hard disk actuator and a structure (25) for electrostatic removal of dielectric particles according to any of claims 1-8, comprising the steps of: forming at least three conductive regions (26a, 26b, 26c) adjacent to each other and forming sequence and periodic biasing means (27a, 27b, 27c, 28) for said conductive regions configured to bias said conductive regions according to a biasing sequence corresponding to a direction of desired removal of the dielectric material, and so to remove the dielectric particles from a surface of the hard disk.

14. A process according to Claim 13, **characterized in** t at said step of forming at least three conductive regions (26a, 26b, 26c) comprises the steps of:
- depositing a first metal layer on a first insulating material layer (42); and
- shaping said metal layer to form said conductive regions (26a, 26b, 26c); and **in that** said step of forming sequence and periodic biasing means (27a, 27b, 27c, 28) comprises the steps of:
- forming a second electrically insulating material layer (43) on said conductive regions;
- forming contact openings (44) in said second electrically insulating material layer at said conductive regions;
- depositing a second metal layer on an insulating layer; and
- shaping said second metal layer to form said electrical connection lines (27a, 27b, 27c).

## Patentansprüche

1. Integrierte Vorrichtung (29) mit einem Festplatten-Aktuator und einer Konstruktion (25) zum elektrostatischen Entfernen von dielektrischen Partikeln, wobei die Konstruktion (25) wenigstens drei einander benachbart angeordnete leitfähige Bereiche (26a, 26b, 26c) sowie eine sequenzielleund periodische Vorspanneinrichtung (27a, 27b, 27c, 28) für die leitfähigen Bereiche aufweist, um die leitfähigen Bereiche in Abhängigkeit von einer Sequenz vorzuspannen, die einer gewünschten Richtung für das Entfernen von dielektrischen Partikeln entspricht.

2. Vorrichtung nach Anspruch 1,
**dadurch gekennzeichnet, dass** die sequenzielle- und periodische Vorspanneinrichtung (27a, 27b, 27c, 28) eine gepulste Spannungsquelle (28) sowie Verbindungsleitungen (27a, 27b, 27c) aufweist, die mit den leitfähigen Bereichen verbunden sind und den leitfähigen Bereichen (26a, 26b, 26c) benachbart in der gewünschten Richtung für das Entfernen sukzessive Spannungsimpulse (V1, V2, V3) zuführen.

3. Vorrichtung nach Anspruch 2,
**dadurch gekennzeichnet, dass** die gepulste Spannungsquelle (28) n Ausgänge aufweist, von denen jeder mit einer jeweiligen Verbindungsleitung (27a, 27b, 27c) verbunden ist, dass jede Verbindungsleitung alle n leitfähigen Bereiche mit einem leitfähigen Bereich (26a, 26b, 26c) verbunden ist, und dass verschiedene Verbindungsleitungen mit einander benachbarten leitfähigen Bereichen verbunden sind.

4. Vorrichtung nach Anspruch 3,
**dadurch gekennzeichnet, dass** n Drei entspricht.

5. Vorrichtung nach einem der vorausgehenden Ansprüche,
**dadurch gekennzeichnet, dass** die leitfähigen Bereiche (26a, 26b, 26c) entlang konzentrischer, geschlossener Linien verlaufen.

6. Vorrichtung nach einem der vorausgehenden Ansprüche,
**dadurch gekennzeichnet, dass** die leitfähigen Bereiche (26a, 26b, 26c) entlang von konzentrischen Umfangslinien verlaufen.

7. Vorrichtung nach einem vorausgehenden Ansprüche,
**dadurch gekennzeichnet, dass** sie ein Substrat (40) aus Halbleitermaterial und eine sich auf dem Substrat erstreckende Schicht (41) aus elektrisch isolierendem Material aufweist, und dass die leitfähigen Bereiche (26a, 26b, 26c) sich auf der Schicht aus elektrisch isolierendem Material erstrecken.

8. Vorrichtung nach Anspruch 7,
**dadurch gekennzeichnet, dass** die leitfähigen Bereiche (26a, 26b, 26c) Metall eines ersten Metallniveaus aufweisen, dass die Verbindungsleitungen Metall eines zweiten Metallniveaus aufweisen, und dass sich eine Schicht (43) aus dielektrischem Material zwischen den leitfähigen Bereichen und den Verbindungsleitungen erstreckt und Kontaktöffnungen (44) zwischen den leitfähigen Bereichen und den Verbindungsleitungen aufweist.

9. Verfahren zum elektrostatischen Entfernen von dielektrischen Partikeln von einer integrierten Vorrichtung (29), die einen Festplatten-Aktuator (9) aufweist,
**dadurch gekennzeichnet, dass** es folgenden Schritt aufweist:
- sequenzielles und periodisches Vorspannen von mindestens drei leitfähigen Bereichen (26a, 26b, 26c), die einander benachbart angeordnet sind, in Abhängigkeit von einer Vorspannabfolge, die einer gewünschten Richtung für das Entfernen von dielektrischen Partikeln entspricht, um dadurch die dielektrischen Partikel von einer Oberfläche der Festplatte zu entfernen.

10. Verfahren nach Anspruch 9,
**dadurch gekennzeichnet, dass** der Schritt des Vorspannens folgende Schritte umfasst:
- Erzeugen von wenigstens einer Folge von Spannungsimpulsen (V1, V2, V3) und
- zu jedem leitfähigen Bereich (26a, 26b, 26c) erfolgendes Schicken von Spannungsimpulsen, die in Bezug auf zu einem unmittelbar vorangehenden leitfähigen Bereich geschickte Spannungsimpulse in der gewünschten Richtung für das Entfernen verzögert sind und in Bezug auf zu einem unmittelbar nachfolgenden leitfähigen Bereich geschickte Spannungsimpulse in der gewünschten Richtung für das Entfernen voreilend sind.

11. Verfahren nach Anspruch 10,
**gekennzeichnet durch** den Schritt des Erzeugens von n Folgen von Spannungsimpulsen, die zueinander phasenverschoben sind, sowie **dadurch**, dass jede Folge von Impulsen alle n leitfähigen Bereiche einem leitfähigen Bereich (26a, 26b, 26c) zugeführt wird.

12. Verfahren nach Anspruch 11,
**dadurch gekennzeichnet, dass** n Drei entspricht.

13. Verfahren zum Herstellen einer integrierten Vorrichtung, die einen Festplatten-Aktuator und eine Konstruktion (25) zum elektrostatischen Entfernen von dielektrischen Partikeln nach einem der Anspruch 1-8 aufweist, mit folgenden Schritten: Bilden von mindestens drei leitfähigen Bereichen (26a, 26b, 26c) in einander benachbarter Weise und Bilden einer sequenziellen- und periodischen Vorspanneinrichtung (27a, 27b, 27c, 28) für die leitfähigen Bereiche, die zum Vorspannen der leitfähigen Bereiche in Abhängigkeit von einer Vorspannsequenz konfiguriert ist, die einer gewünschten Richtung für das Entfernen des dielektrischen Materials entspricht, um auf diese Weise die dielektrischen Partikel von einer Oberfläche der Festplatte zu entfernen.

14. Verfahren nach Anspruch 13,
**dadurch gekennzeichnet, dass** der Schritt des Bildens von wenigstens drei leitfähigen Bereichen (26a, 26b, 26c) folgende Schritte aufweist:
- Aufbringen einer ersten Metallschicht auf einer ersten Schicht (42) aus dielektrischem Material;
- Formen der Metallschicht zum Bilden der leitfähigen Bereiche (26a, 26b, 26c);
und dass der Schritt des Bildens der sequenziellen- und periodischen Vorspanneinrichtung (27a, 27b, 27b, 28) folgende Schritte aufweist:
- Bilden einer zweiten Schicht (43) aus elektrisch isolierendem Material auf den leitfähigen Bereichen;
- Bilden von Kontaktöffnungen (44) in der zweiten Schicht aus elektrisch isolierendem Material an den leitfähigen Bereichen;
- Aufbringen einer zweiten Metallschicht auf der isolierenden Schicht; und
- Formen der zweiten Metallschicht zum Bilden der elektrischen Verbindungsleitungen (27a, 27b, 27c).

## Revendications

1. Dispositif intégré (29) comprenant un dispositif d'entraînement de disque dur, une structure (25) pour l'élimination électrostatique de particules diélectriques, dans lequel ladite structure (25) comprend au moins trois régions conductrices (26a, 26b, 26c) disposées de façon adjacente les unes par rapport aux autres et un moyen de polarisation en séquence et périodique (27a, 27b, 27c, 28) pour lesdites régions conductrices pour une polarisation desdites régions conductrices conformément à une séquence correspondant à une direction d'élimination désirée de particules diélectriques.

2. Dispositif selon la revendication 1, **caractérisé en ce que** ledit moyen de polarisation en séquence et périodique (27a, 27b, 27c, 28) comprend une source de tension à impulsions (28) et des lignes de connexion (27a, 27b, 27c) connectées auxdites régions conductrices et fournissant des impulsions de tension successives (V1, V2, V3) aux régions conductrices (26a, 26b, 26c) adjacentes dans ladite direction d'élimination désirée.

3. Dispositif selon la revendication 2, **caractérisé en ce que** la dite source de tension à impulsions (28) possède n sorties chacune connectée à une ligne de connexion respective (27a, 27b, 27c), **en ce que** chaque ligne de connexion est connectée à une région conductrice (26a ; 26b ; 26c) toutes les n régions conductrices et **en ce que** différentes lignes de connexion sont connectées aux régions conductrices adjacentes.

4. Dispositif selon la revendication 3, **caractérisé en ce que** n est égal à trois.

5. Dispositif selon l'une des revendications précédentes, **caractérisé en ce que** lesdites régions conductrices (26a, 26b, 26c) s'étendent le long de lignes fermées concentriques.

6. Dispositif selon l'une des revendications précédentes, **caractérisé en ce que** lesdites régions conductrices (26a, 26b, 26c) s'étendent le long de circonférences concentriques.

7. Dispositif selon l'une des revendications précédentes, **caractérisé en ce qu'**il comprend un substrat (40) de matériau semi-conducteur, une couche (41) de matériau électriquement isolant s'étendant sur ledit substrat et **en ce que** lesdites régions conductrices (26a, 26b, 26c) s'étendent sur ladite couche de matériau électriquement isolant.

8. Dispositif selon la revendication 7, **caractérisé en ce que** lesdites régions conductrices (26a, 26b, 26c) comprennent un métal d'un premier niveau de métal, **en ce que** lesdites lignes de connexion comprennent un métal d'un second niveau de métal et **en ce qu'**une couche (43) de matériau diélectrique s'étend entre lesdites régions conductrices et lesdites lignes de connexion et possède des ouvertures de contact (44) entre lesdites régions conductrices et lesdites lignes de connexion.

9. Procédé pour éliminer électrostatiquement des particules diélectriques d'un dispositif intégré (29) incluant un dispositif d'entraînement de disque dur (9), **caractérisé en ce qu'**il comprend l'étape :
- de polariser en séquence et périodiquement au moins trois régions conductrices (26a, 26b, 26c) agencées de façon adjacente les unes par rapport aux autres selon une séquence de polarisation correspondant à une direction d'élimination désirée de particules diélectriques, éliminant ainsi les particules diélectriques d'une surface du disque dur.

10. Procédé selon la revendication 9, **caractérisé en ce que** ladite étape de polarisation comprend les étapes consistant à :
- générer au moins un train d'impulsions de tension (V1, V2, V3), et
- envoyer, à chaque région conductrice (26a, 26b, 26c), des impulsions de tension qui sont retardées par rapport aux impulsions de tension envoyées vers une région conductrice immédiatement précédante dans ladite direction de mouvement désirée et avancées par rapport aux impulsions de tension envoyées à une région conductrice immédiatement consécutive dans ladite direction de mouvement désirée.

11. Procédé conforme à la revendication 10, **caractérisé par** l'étape consistant à générer n trains d'impulsions de tension déphasées les unes par rapport aux autres et en ce que chaque train d'impulsions est fourni à une région conductrice (26a, 26b, 26c) toutes les n régions conductrices.

12. Procédé conforme à la revendication 11, **caractérisé en ce que** n est égal à trois.

13. Procédé pour produire un dispositif intégré comprenant un dispositif d'entraînement de disque dur et une structure (25) pour l'élimination électrostatique de particules diélectriques selon n'importe laquelle des revendications 1 à 6, comprenant les étapes consistant à : de former au moins trois régions conductrices (26a, 26b, 26c) adjacentes les unes par rapport aux autres, et former un moyen de polarisation en séquence et périodique (27a, 27b, 27c, 28) pour lesdites régions conductrices configuré pour polariser lesdites régions conductrices selon à une séquence de polarisation correspondant à une direction d'élimination désirée du matériau diélectrique, et ainsi pour éliminer les particules diélectriques d'une surface du disque dur.

14. Procédé selon la revendication 13, **caractérisé en ce que** ladite étape de formation d'au moins trois régions conductrices (26a, 26b, 26c) comprend les étapes consistant à :
- déposer une première couche de métal sur une première couche (42) de matériau isolant ; et
- façonner ladite couche de métal afin de former lesdites régions conductrices (26a, 26b, 26c) ; et **en ce que** ladite étape de formation d'un moyen de polarisation en séquence et périodique (27a, 27b, 27c, 28) comprend les étapes consistant à :
- former une seconde couche (43) de matériau électriquement isolant sur lesdites régions conductrices ;
- former des ouvertures de contact (44) dans ladite seconde couche de matériau électriquement isolant au niveau desdites régions conductrices ;
- déposer une seconde couche de métal sur une couche isolante ; et
- façonner ladite seconde couche de métal afin de former lesdites lignes de connexion (27a, 27b, 27c).
